# EUROPEAN PATENT SPECIFICATION

(11) **EP 1 045 386 B1**
(45) Date of publication and mention of the grant of the patent: **19.12.2007**
(21) Application number: 00107258.6
(22) Date of filing: 03.04.2000
(51) Int. Cl.: G11B 20/00

(54) **Method and apparatus for preventing illegal use of multimedia content**
Verfahren und Gerät zur Verhinderung der unberechtigten Benutzung von Multimediainhalt
Procédé et dispositif pour empêcher l'utilisation non autorisée du contenu multimédia

(30) Priority: 16.04.1999 EP 99107643; 12.05.1999 EP 99108640
(43) Date of publication of application: 18.10.2000
(73) Proprietor: DEUTSCHE THOMSON-BRANDT GMBH, 78048 Villingen-Schwenningen (DE)
(72) Inventor: Herpel, Carsten, 30171 Hannover (DE); Schreiber, Ulrich, 30827 Garbsen (DE); Aust, Andreas, 30177 Hannover (DE); Böhm, Johannes, 37083 Göttingen (DE)
(74) Representative: Wördemann, Hermes

(56) References cited:
- EP-A- 0 328 141
- EP-A- 0 457 655
- EP-A- 0 715 246
- EP-A- 0 813 194
- COX I J ET AL: "SOME GENERAL METHODS FOR TAMPERING WITH WATERMARKS" IEEE JOURNAL ON SELECTED AREAS IN COMMUNICATIONS,US,IEEE INC. NEW YORK, vol. 16, no. 4, May 1998 (1998-05), pages 587-593, XP000765117 ISSN: 0733-8716

## Description

The invention relates to a method for preventing illegal content copies of multimedia content while preserving sufficient flexibility for the legitimate content user.

### Background

Current digital media like DAT and MiniDisk include a mechanism that prevents the generation of multiple digital copies of a content item. In that case, only one digital copy is authorized. With future digital multimedia systems, copy protection will become more sophisticated and even more enforcable.
This may have the disadvantage that the legitimate user cannot freely move the content between different storage media (i.e., disks, tapes) since such a move implies that the content item is considered as "copied". Therefor further copies become illegal and will be prohibited by the device.

If copies from digital multimedia sources are not made digitally but in the analog domain, copying is not restricted by the currently existing digital audio and video, however the quality is sacrificed.

Otherwise, digital multimedia content, like digitally coded music in MP3 format can currently be downloaded with subscription from the Internet and afterwards freely copied without loss of quality and additional fees to the content owner.

### Invention

It is an object of the present invention to disclose a novel method for preventing illegal usage of multimedia content while preserving sufficient flexibility for the legitimate content user and an apparatus performing such method.

According to the invention, this object is achieved by means of the features specified in main claims. Advantageous designs and developments are specified in subclaims.

With the advent of digital multimedia content distribution formats, including digital music, video or software, the unauthorized copying of multimedia content items becomes more and more a problem from the perspective of the content author or rights owner. Restrictions on content accessibility are needed, however, they should not be a nuisance to a legitimate owner of the rights to use such a content item.

It is assumed that multimedia content in future will be stored on mass storage devices, or media servers, that become part of the home entertainment equipment. On the other hand, there will be mobile devices used for play back. A content descriptor associated to each multimedia content item forms the basis for managing the use of content in a flexible manner from the perspective of the user, while still guaranteeing that any restrictions in the usage of the content are observed. Most notably, such content descriptors help to avoid unnecessary copying of the content item itself, by allowing to just move the right to use the content item from one device to another, instead of moving the complete multimedia content item, as detailed in this invention. Moving of the rights means that the multimedia content item at its new location is now the legitimate original that may be played back and from which, for example, one further copy may be derived, if permitted by the associated rights.

In a simple embodiment, this can be accomplished by swapping the value of a flag indicating original or copy between the previous original and the new version of the item. In future digital systems with encrypted or partially encrypted content, this can be accomplished by the said content descriptor that describes the rights associated to a multimedia content item and that includes a location-specific decryption key. Advantageously, the original multimedia content item need not be deleted from the primary mass storage device, or media server, allowing for a temporary lease of play back rights to secondary, possibly mobile devices.

Digital multimedia material, like audio, video, text, games, software, etc., will be available both on consumer electronics and computer platforms. The invention holds independent of the location of the item of multimedia content. It actually becomes more important in such a situation.

### Exemplary embodiments

Exemplary embodiments of the invention are explained in more detail in the following description.

The invention proposes multimedia content items to be accompanied by content descriptors that specify the legitimate rights that are associated to the content item. Content descriptors can be associated to multimedia content items by referencing object or stream identifiers related to the content item in the content descriptor. In order to make such an association unambiguous and to ensure that it cannot be easily broken, advantageously a unique signature for a content item can be included in the content signal itself by means such as watermarking. The same signature can then be referenced in the content descriptor. The content descriptor is considered not visible to the user and made tamper-proof by means of authentication.

Such a secure tie between the content descriptor conveying the usage rights information and the content item itself allows to establish procedures, as claimed in this invention, to copy the actual multimedia content item freely while maintaining tight control over the ability to use it. This is specifically important when content items are frequently swapped between different storage and play back devices, for example, a media server located in the users' home and a portable player device. Depending on the storage size of the portable device, frequently played content need not be copied from the media server each time. As long as the item is still physically present on the portable device, only the usage license, which is a rather small amount of data, has to be swapped between the media server and the portable device. Hence, content that is only authorized for a limited number of concurrently existing copies can be used efficiently on multiple devices.

The procedure to transfer a multimedia content item and its associated usage rights, embedded in a content descriptor, from a primary storage device to a secondary device, possibly a player device, has to be tamper-proof. The following steps must be followed: First the multimedia content item itself is copied to the secondary device, if it is not yet present there. Secondly, the content descriptor is copied to the secondary device. In case of encrypted or partially encrypted content, this descriptor will contain the decryption key valid for the primary device. Thirdly, the content descriptor on the primary device is removed. Then, fourthly, a new decryption key for use of the multimedia content item on the secondary device is generated and inserted in the copied content descriptor.

The said procedure advantageously assumes that decryption keys are valid only for a single storage device or a single player application. Therefor, the copied multimedia content item with the copied content descriptor will not be playable on the secondary device before a new key has been generated.

In that case the procedure is tamper-proof with respect to illicit duplication of licenses by interruption of the procedure.

Advantageously, this procedure is handled by a piece of trusted software or dedicated hardware. In order to further improve security of this procedure, a secure communication channel should be used between the devices, especially if the transaction occurs in a wide area network, such as the Internet. Optionally, the trusted software or dedicated hardware may as well establish a secure communication channel to a third party that authorizes the said procedure. After this procedure, the multimedia content item is physically present on both the primary and the secondary device. However, it is only playable on the secondary device until the license, in the form of the content descriptor, is given back to the primary device.

Optionally, an additional license may be generated, after payment of the applicable dues, to make the content on the primary device accessible independent of the license that has been transfered to the secondary device. Conversely, if the multimedia content item is no longer needed on the primary device, it can be physically deleted, since the secondary device now contains a copy that has all the rights previously associated to the original version of the item. Specifically, this includes usage rights and the right to move the multimedia content item to a further third device at any time. Usage rights might include the permission to generate one or more copies of the multimedia content item.

Preferrably, the media server maintains a complete data base of multimedia content items at all times. The number of authorized playable copies from this data base may be controlled with the aforementioned procedure. Each time a copy is made, the license data base of the server is updated appropriately. Depending on the status of the license information, it may not be possible to derive further copies.

In a further preferred embodiment, the content descriptor consists of a number of flags including an original/copy flag. The rights associated to the original include the permission to generate one digital copy of the content item, while no further copies may be generated from a content item already marked as copy.

Moving the rights of a multimedia content item in that case corresponds to the following procedure: Copy the item of multimedia content first with the original/copy flag set to indicate 'copy'. Then reset the original/copy flag in the original file to 'copy' status and set the original/copy flag in the new file to indicate 'original'. This is tamper-proof, since in case of power failure, etc. in the worst case both versions of the item will be labeled as copies. Optionally a verifying process can be invoked and, as a last step, the original item may be deleted if it is not retained as a copy.

In a further preferred embodiment this procedure can apply not only to multimedia contents but to software applications like multimedia-players, dictionary, route-planner themselves.

A content descriptor for multimedia content items contains at least one of the following elements:
- A key for decryption
- An encryption descriptor indicating the parts of the media file that are encrypted and the encryption scheme
- A flag indicating the file is an original or a copy (orig/copy flag),
- Copy bits for indicating the copy status, for example: CGMS bits and a copies-made counter
- A media active bit indicating the media file is usable by the device

## Claims

1. Method for preventing illegal usage of a multimedia content item stored on a primary mass storage device, the multimedia content item being encrypted or partially encrypted and unambiguously labelled with a content descriptor, the content descriptor conveying the rights of usage, movement, or copying of the multimedia content item and a decryption key associated to the multimedia content item, the method having the steps of:
- duplicating the multimedia content item from the primary storage device to a secondary storage device,
- transferring the content descriptor from the primary storage device to a secondary storage device, and
- deleting the content descriptor from the primary storage device.

2. Method according to claim 1, further including the steps of:
- encrypting or partially encrypting a multimedia content item, and
- unambiguously labelling the multimedia content item with a content descriptor.

3. Method according to claim 1 or 2, wherein only the content descriptor is transferred from the primary storage device to the secondary storage device if the multimedia content item is already present on the secondary storage device.

4. Method according to one of claims 1 to 3, wherein the unambiguous labelling of the multimedia content item with the content descriptor is achieved by an auxiliary authentication signal that is both inserted in the multimedia content item and referenced in the content descriptor.

5. Method according to one of claims 1 to 4, wherein the decryption key enables the use of the multimedia content item only in a given storage location and in conjunction with a specific instance of a multimedia player application.

6. Method according to one of claims 1 to 5, wherein transferring the content descriptor from the primary storage device to the secondary storage device is done using a piece of trust-worthy software or dedicated hardware over a secure communication channel.

7. Method according to claim 6, wherein said trust-worthy software or dedicated hardware optionally obtains authorization for said process of transferring the content descriptor from a third party over a secure communication channel.

8. Method according to one of claims 1 to 7, wherein after optionally duplicating the multimedia content item from the primary storage device to the secondary storage device, firstly the content descriptor is copied to the secondary storage device, secondly the content descriptor conveying the decryption key for the original multimedia content item is removed from the primary storage device, and thirdly a new decryption key for use of the multimedia content item on the secondary storage device is generated and inserted in the copied content descriptor.

9. Method according to claim 8, wherein an additional decryption key is generated for the primary storage device on permit.

10. Method according to one of claims 1to 9, wherein the rights identification in the content descriptor is embodied by an original/copy indication, specifying the original version of the multimedia content item as having unrestricted rights of usage, movement or copying, and the copy as having restricted rights of usage, movement or copying.

11. Method according to any of claims 1 to 10, including the steps of :
- moving the original version of a multimedia content item labelled with an original/copy indication from a primary storage device to a secondary storage device, by the steps of:
- copying the multimedia content item with the original/copy indication set to indicate a copy,
- resetting the original/copy indication in the original multimedia content item to copy status and
- setting the original/copy indication in the new multimedia content item to indicate original.

12. Method according to any of claims 1 to 11, wherein a verifying process is invoked and in case of successfully moving the multimedia content item from the first storage device to the second storage device the previous original multimedia content item on the first storage device is deleted.

13. Method according to any of claims 1 to 12, wherein, if moving of the multimedia content item is permitted, a move indicator in a user interface of the primary or secondary storage device is enabled.

14. Method according to any of claims 1 to 13, wherein the content descriptor is stored within a non-movable storage area of the first storage device or the second storage device.

15. Method according to any of claims 1 to 14, wherein the content descriptor contains one or more of the following elements:
- a key for decryption,
- an encryption descriptor indicating the parts of the multimedia content item that are encrypted and the encryption scheme,
- a flag indicating the multimedia content item is an original or a copy,
- a copy descriptor indicating the copy status and a copies-made counter, and
- a multimedia content item active descriptor indicating that the multimedia content item is usable by the first storage device or the second storage device.

16. Apparatus for reproducing a multimedia content item stored on a primary storage device, the multimedia content item being encrypted or partially encrypted and unambiguously labelled with a content descriptor conveying the rights of usage, movement, or copying of the multimedia content item, and a decryption key associated to the multimedia content item, having means for:
moving the data concerning the rights of usage, movement, or copying associated to the multimedia content item from the primary storage device to a secondary storage device by duplicating the multimedia content item from the primary storage device to the secondary storage devices,
transferring the content descriptor from the primary storage device to the secondary storage device, and
deleting the content descriptor from the primary device.

17. Apparatus according to claim 16, further having:
- means for encrypting or partially encrypting a multimedia content item, and
- means for unambiguously labelling a multimedia content item with a content descriptor conveying the rights of usage, movement, or copying, and the decryption key associated to the multimedia content item.

18. Apparatus for recording a multimedia content item on a secondary storage device, the multimedia content item being encrypted or partially encrypted and unambiguously labelled with a content descriptor conveying the rights of usage, movement, or copying, and a decryption key associated to the multimedia content item, **characterized in that** it is adapted to receive a multimedia content item from a primary storage device in accordance with a method according to one of claims 1 to 15.

## Patentansprüche

1. Verfahren zur Verhinderung der unberechtigten Benutzung eines auf einem primären Massenspeichergerät gespeicherten Multimediainhaltspostens, wobei der Multimediainhaltsposten verschlüsselt oder teilweise verschlüsselt und unzweideutig mit einem Inhaltsdeskriptor **gekennzeichnet** ist, wobei der Inhaltsdeskriptor die Rechte der Benutzung, Verlagerung oder des Kopierens des Multimediainhaltspostens und einen mit dem Multimediainhaltsposten assoziierten Entschlüsselungsschlüssel übermittelt, wobei das Verfahren die folgenden Schritte umfaßt:
- Duplizieren des Multimediainhaltspostens von dem primären Speichergerät auf ein sekundäres Speichergerät,
- Transferieren des Inhaltsdeskriptors von dem primären Speichergerät zu einem sekundären Speichergerät und
- Löschen des Inhaltsdeskriptors aus dem primären Speichergerät.

2. Verfahren nach Anspruch 1, ferner mit den folgenden Schritten:
- Verschlüsseln oder teilweises Verschlüsseln eines Multimediainhaltspostens und
- unzweideutiges Kennzeichnen des Multimediainhaltspostens mit einem Inhaltsdeskriptor.

3. Verfahren nach Anspruch 1 oder 2, wobei nur der Inhaltsdeskriptor von dem primären Speichergerät zu dem sekundären Speichergerät transferiert wird, wenn der Multimediainhaltsposten bereits auf dem sekundären Speichergerät präsent ist.

4. Verfahren nach einem der Ansprüche 1 bis 3, wobei die unzweideutige Kennzeichnung des Multimediainhaltspostens mit dem Inhaltsdeskriptor durch ein Hilfsauthentifikationssignal erzielt wird, das sowohl in dem Multimediainhaltsposten eingefügt als auch in dem Inhaltsdeskriptor referenziert wird.

5. Verfahren nach einem der Ansprüche 1 bis 4, wobei der Entschlüsselungsschlüssel die Benutzung des Multimediainhaltspostens nur an einer gegebenen Speicherstelle und in Verbindung mit einer spezifischen Instanz einer Multimedia-Player-Anwendung ermöglicht.

6. Verfahren nach einem der Ansprüche 1 bis 5, wobei das Transferieren des Inhaltsdeskriptors von dem primären Speichergerät zu dem sekundären Speichergerät unter Verwendung eines Elements vertrauenswürdiger Software oder spezieller Hardware über einen sicheren Kommunikationskanal erfolgt.

7. Verfahren nach Anspruch 6, wobei die vertrauenswürdige Software oder spezielle Hardware wahlweise eine Autorisierung für den Transfer des Inhaltsdeskriptors durch den Prozeß von einem Dritten über einen sicheren Kommunikationskanal erhält.

8. Verfahren nach einem der Ansprüche 1 bis 7, wobei dem wahlweisen Duplizieren des Multimediainhaltspostens aus dem primären Speichergerät in das sekundäre Speichergerät zuerst der Inhaltsdeskriptor auf das sekundäre Speichergerät kopiert wird, zweitens der den Entschlüsselungsschlüssel für den ursprünglichen Multimediainhaltsposten übermittelnde Deskriptor aus dem primären Speichergerät entfernt wird und drittens ein neuer Entschlüsselungsschlüssel zur Verwendung des Multimediainhaltspostens auf dem sekundären Speichergerät erzeugt und in den kopierten Inhaltsdeskriptor eingefügt wird.

9. Verfahren nach Anspruch 8, wobei bei Zulassung ein zusätzlicher Entschlüsselungsschlüssel für das primäre Speichergerät erzeugt wird.

10. Verfahren nach einem der Ansprüche 1 bis 9, wobei die Rechteidentifikation in dem Inhaltsdeskriptor durch eine Original/Kopie-Indikation realisiert wird, die die Originalversion des Multimediainhaltspostens als uneingeschränkte Rechte der Benutzung, Verlagerung oder des Kopierens und die Kopie als eingeschränkte Rechte der Benutzung, Verlagerung oder des Kopierens aufweisend spezifiziert.

11. Verfahren nach einem der Ansprüche 1 bis 10, mit den folgenden Schritten:
- Verlagern der mit einer Original/Kopie-Indikation **gekennzeichnet**en Originalversion eines Multimediainhaltspostens von einem primären Speichergerät zu einem sekundären Speichergerät, durch die folgenden Schritte:
- Kopieren des Multimediainhaltspostens mit auf Kopie gesetzter Original/Kopie-Indikation,
- Zurücksetzen der Original/Kopie-Indikation in dem Original-Multimediainhaltsposten auf Kopie-Status und
- Setzen der Original/Kopie-Indikation in dem neuen Multimediainhaltsposten auf Original.

12. Verfahren nach einem der Ansprüche 1 bis 11, wobei ein verifizierungsprozeß aufgerufen wird und im Fall des erfolgreichen Verlagerns des Multimediainhaltspostens von dem ersten Speichergerät in das zweite Speichergerät der vorherige Original-Multimediainhaltsposten auf dem ersten Speichergerät gelöscht wird.

13. Verfahren nach einem der Ansprüche 1 bis 12, wobei, wenn eine Verlagerung des Multimediainhaltspostens gestattet ist, ein Verlagerungsindikator in einer Benutzeroberfläche des primären oder sekundären Speichergeräts freigegeben wird.

14. Verfahren nach einem der Ansprüche 1 bis 13, wobei der Inhaltsdeskriptor in einem nicht wechselbaren Speicherbereich des ersten Speichergeräts oder des zweiten Speichergeräts gespeichert wird.

15. Verfahren nach einem der Ansprüche 1 bis 14, wobei der Inhaltsdeskriptor eines oder mehrere der folgenden Elemente enthält:
- einen Schlüssel zur Entschlüsselung,
- einen Verschlüsselungsdeskriptor, der die Teile des Multimediainhaltspostens, die verschlüsselt sind, und das Verschlüsselungsschema angibt,
- ein Flag, das angibt, daß der Multimediainhaltsposten ein Original oder eine Kopie ist,
- einen Kopie-Deskriptor, der den Kopie-Status und einen Angefertigte-Kopien-Zähler angibt, und
- einen Multimediainhaltsposten-aktiv-Deskriptor der angibt, daß der Multimediainhaltsposten durch das erste Speichergerät oder das zweite Speichergerät benutzbar ist.

16. Vorrichtung zum Wiedergeben eines auf einem primären Speichergerät gespeicherten Multimediainhaltspostens, wobei der Multimediainhaltsposten verschlüsselt oder teilweise verschlüsselt und unzweideutig mit einem Inhaltsdeskriptor **gekennzeichnet** ist, der die Rechte der Benutzung, Verlagerung oder des Kopierens des Multimediainhaltspostens und einen mit dem Multimediainhaltsposten assoziierten Entschlüsselungsschlüssel übermittelt, mit Mitteln zum Verlagern der Daten bezüglich der Rechte der Benutzung, Verlagerung oder des Kopierens, die mit dem Multimediainhaltsposten assoziiert sind, von dem primären Speichergerät zu einem sekundären Speichergerät durch Duplizieren des Multimediainhaltspostens aus dem primären Speichergerät auf das sekundäre Speichergerät, Transferieren des Inhaltsdeskriptors von dem primären Speichergerät zu dem sekundären Speichergerät und Löschen des Inhaltsdeskriptors aus dem primären Gerät.

17. Vorrichtung nach Anspruch 16, die ferner folgendes aufweist:
- Mittel zum Verschlüsseln oder teilweisen Verschlüsseln eines Multimediainhaltspostens und
- Mittel zum unzweideutigen Kennzeichnen eines Multimediainhaltspostens mit einem Inhaltsdeskriptor, der die Rechte der Benutzung, Verlagerung oder des Kopierens und den mit dem Multimediainhaltsposten assoziierten Entschlüsselungsschlüssel übermittelt.

18. Vorrichtung zum Aufzeichnen eines Multimediainhaltspostens auf einem sekundären Speichergerät, wobei der Multimediainhaltsposten verschlüsselt oder teilweise verschlüsselt und unzweideutig mit einem Inhaltsdeskriptor **gekennzeichnet** ist, der die Rechte der Benutzung, Verlagerung oder des Kopierens und einen mit dem Multimediainhaltsposten assoziierten Entschlüsselungsschlüssel übermittelt, **dadurch gekennzeichnet, daß** sie dafür ausgelegt ist, einen Multimediainhaltsposten von einem primären Speichergerät gemäß einem Verfahren nach einem der Ansprüche 1 bis 15 zu empfangen.

## Revendications

1. Procédé pour empêcher l'utilisation non autorisée d'un élément de contenu multimédia stocké sur un premier dispositif de stockage de masse, l'élément de contenu multimédia étant chiffré ou partiellement chiffré et étiqueté de façon non ambiguë avec un descripteur de contenu, le descripteur de contenu contenant les droits d'utilisation, de déplacement, ou de copie de l'élément de contenu multimédia et une clef de déchiffrement associée à l'élément de contenu multimédia, le procédé comprenant les étapes de :
- duplication de l'élément de contenu multimédia à partir du premier dispositif de stockage sur un deuxième dispositif de stockage,
- transfert du descripteur de contenu du premier dispositif de stockage vers un deuxième dispositif de stockage, et
- suppression du descripteur de contenu du premier dispositif de stockage.

2. Procédé selon la revendication 1, comprenant en outre les étapes de :
- chiffrement ou chiffrement partiel d'un élément de contenu multimédia, et
- étiquetage de façon non ambiguë de l'élément de contenu multimédia avec un descripteur de contenu.

3. Procédé selon la revendication 1 ou 2, où seul le descripteur de contenu est transféré du premier dispositif de stockage vers le deuxième dispositif de stockage si l'élément de contenu multimédia est déjà présent sur le deuxième dispositif de stockage.

4. Procédé selon une des revendications 1 à 3, où l'étiquetage non ambigu de l'élément de contenu multimédia par le descripteur de contenu est réalisé par un signal d'authentification auxiliaire qui est à la fois inséré dans l'élément de contenu multimédia et référencé dans le descripteur de contenu.

5. Procédé selon une des revendications 1 à 4, où la clef de déchiffrement permet l'utilisation de l'élément de contenu multimédia uniquement à un emplacement de stockage donné et conjointement à un exemple spécifique d'une application de lecteur multimédia.

6. Procédé selon une des revendications 1 à 5, où le transfert du descripteur de contenu du premier dispositif de stockage vers le deuxième dispositif de stockage est effectué à l'aide d'une partie d'un logiciel de confiance ou d'un matériel dédié via un canal de communication sécurisé.

7. Procédé selon la revendication 6, où ledit logiciel de confiance ou le matériel dédié obtient en option l'autorisation pour ledit processus de transférer le descripteur de contenu à partir d'un tiers via un canal de communication sécurisé.

8. Procédé selon une des revendications 1 à 7, où après la duplication optionnelle de l'élément de contenu multimédia du premier dispositif de stockage vers le deuxième dispositif de stockage, premièrement le descripteur de contenu est copié sur le deuxième dispositif de stockage, deuxièmement le descripteur de contenu contenant la clef de déchiffrement pour l'élément de contenu multimédia original est retiré du premier dispositif de stockage, et troisièmement une nouvelle clef de déchiffrement pour l'utilisation de l'élément de contenu multimédia sur le deuxième dispositif de stockage est générée et insérée dans le descripteur de contenu copié.

9. Procédé selon la revendication 8, où une clef de déchiffrement supplémentaire est générée pour le premier dispositif de stockage sur autorisation.

10. Procédé selon une des revendications 1 à 9, où l'identification des droits dans le descripteur de contenu est intégrée par une indication original/copie, spécifiant que la version originale de l'élément de contenu multimédia dispose de droits d'utilisation, de déplacement ou de copie non limités, et que la copie dispose de droits d'utilisation, de déplacement ou de copie limités.

11. Procédé selon l'une quelconque des revendications 1 à 10, comprenant les étapes de :
- déplacement de la version originale d'un élément de contenu multimédia étiqueté avec une indication original/copie d'un premier dispositif de stockage vers un deuxième dispositif de stockage, en suivant les étapes de :
- copie de l'élément de contenu multimédia avec l'indication original/copie réglée pour indiquer une copie,
- réinitialisation de l'indication original/copie dans l'élément de contenu multimédia d'origine sur le statut copie et
- réglage de l'indication original/copie dans le nouvel élément de contenu multimédia pour indiquer l'original.

12. Procédé selon l'une quelconque des revendications 1 à 11, où un processus de vérification est déclenché et en cas de déplacement réussi de l'élément de contenu multimédia du premier dispositif de stockage vers le deuxième dispositif de stockage, l'élément de contenu multimédia d'origine du premier dispositif de stockage est supprimé.

13. Procédé selon l'une quelconque revendications 1 à 12, où, si le déplacement de l'élément de contenu multimédia est permis, un indicateur de déplacement dans une interface utilisateur du premier ou du deuxième dispositif de stockage est activé.

14. Procédé selon l'une des revendications 1 à 13, où le descripteur de contenu est stocké dans une zone inamovible du premier dispositif de stockage ou du deuxième dispositif de stockage.

15. Procédé selon l'une quelconque des revendications 1 à 14, où le descripteur de contenu contient un ou plusieurs des éléments suivants :
- une clef de déchiffrement,
- un descripteur de chiffrement signalant les parties de l'élément de contenu multimédia qui sont chiffrées et la disposition de chiffrement,
- un indicateur indiquant que l'élément de contenu multimédia est un original ou une copie,
- un descripteur de copie indiquant le statut de copie et un compteur de copies effectuées, et
- un descripteur d'élément de contenu multimédia actif indiquant que l'élément de contenu multimédia est utilisable par le premier dispositif de stockage ou le deuxième dispositif de stockage.

16. Dispositif pour reproduire un élément de contenu multimédia stocké sur un premier dispositif de stockage, l'élément de contenu multimédia étant chiffré ou partiellement chiffré et étiqueté de façon non ambiguë avec un descripteur de contenu contenant les droits d'utilisation, de déplacement, ou de copie d'élément de contenu multimédia, et une clef de déchiffrement associée à l'élément de contenu multimédia, et disposant d'un moyen pour déplacer les données concernant les droits d'utilisation, de déplacement, ou de copie associés à l'élément de contenu multimédia à partir du premier dispositif de stockage vers un deuxième dispositif de stockage en dupliquant l'élément de contenu multimédia du premier dispositif de stockage sur le deuxième dispositif de stockage, transférer le descripteur de contenu du premier dispositif de stockage vers le deuxième dispositif de stockage, et supprimer le descripteur de contenu du premier dispositif.

17. Dispositif selon la revendication 16, comprenant en outre :
- un moyen pour chiffrer ou partiellement chiffrer un élément de contenu multimédia, et
- un moyen pour étiqueter de façon non ambiguë un élément de contenu multimédia avec un descripteur de contenu contenant les droits d'utilisation, de déplacement, de copie, et la clé de déchiffrement associée à l'article de contenu multimédia.

18. Dispositif pour enregistrer un élément de contenu multimédia sur un deuxième dispositif de stockage, l'élément de contenu multimédia étant chiffré ou partiellement chiffré et étiqueté de façon non ambiguë avec un descripteur de contenu contenant les droits d'utilisation, de déplacement, ou de copie, et une clef de déchiffrement associée à un élément de contenu multimédia, **caractérisé en ce qu'**il est adapté pour recevoir un élément de contenu multimédia provenant d'un premier dispositif de stockage conformément à un procédé selon une des revendications 1 à 15.
